# EUROPEAN PATENT SPECIFICATION

(11) **EP 4 703 172 B1**
(45) Date of publication and mention of the grant of the patent: **02.12.2026**
(21) Application number: 25199125.3
(22) Date of filing: 29.08.2025
(51) Int. Cl.: B60K 15/07

(54) **TRUCK COMPRISING A PIVOTABLE BRACKET**
LASTKRAFTWAGEN MIT EINER SCHWENKBAREN KONSOLE
CAMION AVEC UN SUPPORT PIVOTANT

(30) Priority: 30.08.2024 NL 2038539
(43) Date of publication of application: 04.03.2026
(73) Proprietor: DAF Trucks N.V., 5643 TW Eindhoven (NL)
(72) Inventor: VAN DER KNAAP, Albertus Clemens Maria, 5643 TW Eindhoven (NL); SCHELLEKENS, Josephus Cornelis Maria, 5643 TW Eindhoven (NL); WEIJENBORG, Bernardus Johannes Maria, 5643 TW Eindhoven (NL); PIROS, Zoltán, 5643 TW Eindhoven (NL)
(74) Representative: V.O.

(56) References cited:
- KR-A- 20230 089 812
- US-A1- 2014 251 479
- US-A1- 2018 251 023
- US-B2- 11 794 625

## Description

The invention relates to a truck comprising a chassis that includes a pair of longitudinal chassis members that extend between a front axle and a rear axle of the truck, and a frame for suspending an elongate pressure vessel to the chassis behind a cabin of the truck.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in Hydrogen Internal Combustion Engine vehicles (H2-ICE) the hydrogen fuel is burnt in the combustion chambers with pistons that move up and down, directly driving the wheels via the engine's central output shaft. The same Hydrogen Storage System (HSS) comprising pressurized fuel tanks mounted on board of the vehicle may be needed in these H2-ICE applications. Such pressurized fuel tanks may for example be mounted on a lateral side of the chassis, and/or between the cabin and the trailer extending mainly above but indirectly attached to the chassis via a separate frame structure, also referred to as "cabin backpack".

To avoid rupture of the tank, it is important to prevent high peak forces being exerted on these chassis mounted tanks, either at the sides or in the backpack. Particularly, when high (radial) forces and torques are being submitted the relatively weak boss ends of the tank may result in breaking out of the tank's (carbon fibre based) encapsulation material that maintains the shape of the pressurized fuel tank. For this reason, most tank suppliers recommend to mount the tank to the chassis by a set of straps that clamp the tank around its robust cylindrical belly, the so-called "strap mounting", instead of "neck mounting" wherein the tank is fixated to the chassis via its outer two axial boss end inserts, advantageously avoiding a collision load path via the relatively vulnerable metal boss end inserts in the spherical axial ends of the hydrogen vessels in case of a side impact crash from other vehicles. Apart from these crash impact, or misuse, related peak forces acting in the boss ends also normal use neck mount forces can be a concern in this sense, specifically when heavy large volume fuel tanks as typically needed for once-a-day refueling concept, e.g. comprising up to 70-90 kg of pressurized hydrogen (via a combination of 4 to 5 tanks) to reach a driving range of 800 km or more, are being applied. The gravimetric static and dynamic reaction forces in these discrete distanced fixation points can rise up to considerable high values when the truck is operated at high driving speeds on a rough road surface (e.g. Pavé, potholes, sleeping policeman, etc.)

However, the downside of such a strap mounting is that the tanks are mounted in an over-constrained fashion. That is, radial expansion of the tank ("breathing"), e.g. under impact of varying internal pressure, is constrained by the strap mounting, as well as torsional flex modes imposed on the strap mounting fixation by the deformable chassis ladder frame, which is relatively weak in comparison to the stiff cylindrical structure of the carbon fiber fuel tank. Hence, during normal driving and operating conditions of the truck, such an over-constrained strap mounting may create internal stresses or friction between the tank and the mounts, which can lead to damage and may even cause the cylindrical tanks to slowly crawl away in longitudinal direction as a result of rotational micro-motions (like pulling a cork out of a wine bottle with a corkscrew) that are continuously induced by small chassis torsional deformation angles (related to driving over road irregularities) of the fairly weak ladder frame as typically applied in commercial vehicles. A further disadvantage of strap mounting is that this fixation means consumes precious radial space that is limited by road clearance restraints and maximum chassis height. This reduces the maximum diameter of the pressurized tanks that can be installed at the sides of the chassis and thus less hydrogen can be stored in these strap mounted tanks, negatively affecting the driving range of these hydrogen vehicles.

To avoid these problems, it is most effective to suspend the tanks using a "neck mounting" arrangement in which the pressure vessel is mounted only at its axial ends, thus without using any further mounting elements on the cylindrical body of the tank.

It is well known that high pressure tanks may have varying dimensions (diameter and length), e.g. due to manufacturing tolerances as well as expansion and contraction of the pressure tank as a function of pressure which need to be absorbed by a proper neck mounting fixation solution dealing with these relative motions and dimension variations in a non-constrained manner. Furthermore, chassis deformations due to dynamic behavior of the truck may cause misalignments between the neck mounts and the chassis, mainly rotation angles in the neck mounts. Hence, apart from static variations in tank dimension, e.g. related to tank production and in-vehicle assembly tolerances and expansion as function of internal tank pressure (0 to 900 bar), also dynamic misalignments resulting from chassis and cabin back frame deformations, need to be absorbed by the tank fixation system.

These dimensional variations and misalignments need to be absorbed by the fixation system to the chassis without "torturing" the neck mounts and/or the relatively vulnerable boss ends of the tank, to prevent fatigue and damage to the system. In addition to these so-called "NORMAL USE" aspects the neck mounting based tank suspension arrangement needs to be robust against crash impact related "MISUSE" aspects as well with the objective to avoid hazardous situations in case of a collision of the truck as much as technically possible. In particular, it is desired that after such high energy crash impact the fuel tanks stay attached to the vehicle structure and no leakage of hydrogen is present.

As background, US2014/251479 describes a known truck with a fuel storage system behind the cabin.

### SUMMARY

It is an object of the present invention to provide an improved neck mounting arrangement for suspending elongate pressure vessels, e.g. fuel tanks for storing hydrogen at pressure levels up to 900 bar, on board of a truck. In particular the present invention relates to an improved neck mounting arrangement of upstanding elongated pressure vessels as being applied in a cabin backpack frame structure. Therefore, aspects of the invention relate to a truck as defined in the appended claims.

The truck comprises a chassis that includes a pair of longitudinal chassis members that extend between a front axle and a rear axle of the truck, and a frame arranged for suspending an elongate pressure vessel in a substantially upright orientation behind a cabin of the truck, e.g. directly behind the cabin, or between the cabin and a cargo box or trailer of the truck. The frame comprises a strut that extends upward from a top side of the chassis, and a lower support arm extending from the strut and providing a lower neck mount that is mounted to a lower axial end of the elongated pressure vessel. The lower support arm is connected to the strut by a bracket.

The bracket is pivotable about a pivot axis that extends from the strut, and the lower support arm is provided at a vertical distance below or above the pivot axis. The pivotable bracket is arranged for allowing a movement of the lower support arm with respect to the strut over a guided path transverse to the pivot axis while maintaining the mechanical connection in case of an impact on the truck, to protect the lower neck mount against overloads and keep the vessel attached to the vehicle structure.

Accordingly, by allowing the lower support arm to move with respect to the strut in case of an impact, the peak force on the lower neck mount is reduced since a portion of the impact energy is absorbed by the movement. In contrast to vessel mounting arrangements that rely on rupture, or breaking elements to absorb the impact, which may cause a hazardous situation due to the unsupported or loose pressure vessel, the pivotable brackets of the present invention allow a movement while maintaining the mechanical connection between the lower neck mount and the strut. Preferably, the bracket remains fixated to the strut during normal operating conditions of the truck, and only breaks free from its fixed position when a force or torque on the bracket exceeds a threshold.

Due to the bracket being pivotably mounted about a pivot axis, it defines a guided path that follows a segment of an arc transverse to the pivot axis. The radius of the guided path can be defined by the vertical distance between the pivot axis and the lower neck mount. The direction of the guided path may be dependent on the orientation of the pivot axis.

For example, the pivot axis may extend from the strut in a lateral direction, transverse to the driving direction of the truck. As a result, the guided path is in the driving direction. In this way, the bracket is able to absorb a portion of impact energy in case of a frontal impact on the truck. Optionally, the thin sheet metal based rear wall structure of the cabin may act as a "cushion" for the cylindrical body of the suspended elongated pressure vessel. In other words, the rear wall may provide a soft crash impact buffer arranged for abutting the cylindrical body of the pressure vessel first in case of an impact. Said crash impact buffer provided by the rear cabin wall is soft in that it is more compliant than the cylindrical vessel body to reduce the load on the vessel, i.e. provides a crash zone to increase the time over which a change in velocity (and consequently momentum) occurs from the impact during the collision by a controlled deformation. Accordingly, in case of a frontal impact on the cabin by an external object, like the trailer rear end of a preceding truck, the external object first hits or intrudes in the cabin pushing it backwards over the chassis frame, to be shortly followed by second a second hit of the cabin rear wall into the upper region of the upstanding tank whilst once united jointly keep on moving until the total kinetic impact energy is being built down to zero Joules. The vessel mount structure may preferably collapse and breath backwards to avoid too high peak load during this crash event. The soft cabin rear wall serves a "gentle" crash energy absorption impact buffer in this sense to control and "dampen" the crash forces at the beginning and during the vessel impact. Furthermore the "cushion" cabin rear wall advantageously distributes the crash load over a relatively large structure of the carbon fiber tank body (avoiding local material stress concentrations). For example, the rear cabin wall may be arranged for deforming or collapsing when impacted by the pressure vessel to absorb impact energy. Preferably, adjacent the pressure vessel the rear wall of the cabin may locally be devoid of pillars or cross beams such that, in case of a collision with the elongated pressure vessel, the rear wall dents around the pressure vessel. In this way, an additional portion of the impact energy can be absorbed while keeping peak forces on the neck mounts low.

Alternatively, the pivot axis may extend from the strut in the driving direction (or slightly angled towards the driving direction), so that the guided path is oriented primarily or substantially in the lateral direction, for absorbing a portion of impact energy in case of a side impact on the truck and more particularly on the upstanding elongated pressure vessel. For example, the struts may provide for a pitch forward mounting of the upstanding elongated pressure vessels. Furthermore, the struts can be positioned in flush with a Y- shaped ladder frame as seen from the top. As result the pivot axis may be oriented with a small pitch and yaw angle with respect to the driving direction.

Also, in case the support arm has multiple links that can independently be connected to the strut, multiple brackets can be used. For example, a first bracket may be pivotably mounted about a first pivot axis that extends primarily, or substantially, in the lateral direction, and a second bracket may be pivotably connected about a second pivot axis that extends primarily or substantially in the driving direction. Accordingly, both frontal and side impact forces can be absorbed to protect the lower neck mount.

In addition to the lower neck mount at the lower axial end, the remaining part of the pressure vessel may be coupled to the strut by a further coupling. For example, the upper axial end of the pressure vessel may be suspended by means of an upper neck mount, e.g. provided on a support arm or bracket, or another part of the frame. Preferably, the upper neck mount is connected by a coupling arrangement that is slidable with respect to a bracket that extends from the strut, for allowing a lateral movement of the upper neck mount towards the strut over a sliding path once a force threshold (e.g. provided by friction coupling or bolt breakage mechanism) is exceeded while maintaining the mechanical connection in case of a lateral impact on the elongated pressure vessel, to protect the upper axial end against overloads during side impacts of the upstanding pressure vessel from external objects. In combination with a ball bearing being integrated in the coupling arrangement, the pressure vessel can be suspended only at its axial ends in a non-overconstrained fashion (particularly assuming flex plate application in the lower neck mount coupling arrangement to the strut), while preventing peak loads on the relatively fragile axial ends of the vessel. In this respect it is noted that at least one of the lower and upper neck mounts preferably comprises a flex plate assembly, including one or multiple flex plates with a flexibility in an out-of-plane direction and a rigidity in at least two in-plane directions, to suspend the pressure vessel to the frame yet allowing axial and radial expansion of the carbon fiber body of the pressure vessel due to internal pressure variations inside the vessel without generating internal stresses. As said, a neck mount that comprises a flex plate assembly at one axial end of the pressure vessel can e.g. be favourably combined with a ball joint or cardanic coupling at the other axial end, to form a non-overconstrained suspension. Such a ball joint or cardanic coupling may preferably be part of the upper neck mount.

The coupling between the upper neck mount and the strut is preferably construed such that it has a high bending stiffness in out-of-plane bending direction with the objective to tightly fixate the tank in the vertical direction of the truck whilst a flex plate assembly at the lower end absorbs pressure dependent tank expansions and misalignments of the tank relative to the truck chassis.

Alternatively, the pressure vessel may be suspended by a neck mount at the lower axial end according to disclosures having pivotable bracket connection to the strut as described in this patent document, combined with any other type of further suspension arrangement to suspend the remaining part of the pressure vessel, such as a strap mount around the cylindrical body of the vessel, or a clamping arrangement that may be slidable in longitudinal direction of the tank.

In some embodiments, the bracket has an L-shape comprising a leg that extends downward from the pivot axis towards a foot that extends outward from the strut and that is mounted to the lower support arm. For example, the lower support arm may be mounted on an upward facing side of the foot, e.g. by a bolt connection or any other type of fixation. In case a bolt connection is used, the bolt connection preferably comprises at least two bolts to prevent a relative rotation between the support arm and the bracket. Alternatively, or additionally, another type of rotation lock is provided between the support arm and the bracket, e.g. comprising keys or dowel pins, or a form-lock between the mating parts.

Instead of an L-shape, the bracket can have any other geometry that connects the lower support arm to the pivot axis at a vertical distance below the pivot axis. For example, in a simple variant the bracket may be triangular or rectangular. Also, the bracket can be provided with reinforcement ribs or flanges or any other shape, e.g. as can be provided by a weight optimized part to establish a rigid link between the pivot axis and the lower support arm.

In order to have a guided path with a sufficiently large stroke the vertical distance between the pivot axis and the lower support arm is preferably at least 10 millimeter, preferably between 20-90 millimeter. In the rearward driving direction of the truck, the guided path preferably comprises an arc with an arc length of at least 15 millimeter, preferably at least 20 millimeter.

In some embodiments the bracket is mounted to the strut by a single bolt, and a centerline of the single bolt defines the pivot axis. The single bolt connection can also be used to provide a clamping force between the bracket and the strut, thus a certain level of coulomb friction. When force or torque on the bracket is large enough to overcome the coulomb friction, the bracket starts to pivot about the pivot axis.

In other words, the bracket may be mounted to the strut by means of a friction coupling. Such a friction coupling is preferably formed by the single bolt connection. Alternatively, or additionally, another type of friction coupling may be present between the bracket and the strut. For example, the bracket and/or the strut may be provided with a slotted hole at a radial distance from the pivot axis. A further bolt may extend through the slotted hole(s) and locally clamp the bracket and strut onto each other to provide a level of coulomb friction. Mating sides of the bracket and/or the strut may at least partially be provided with a rough surface, undulations, ribs or grooves to increase the level of friction between the parts. Alternatively, or additionally, a lock washer can be provided around the pivot axis between the bracket and the strut. Such a lock washer can e.g. be serrated or comprise teeth that cut into the bracket and the strut. Alternatively, a spacer of a material that has a high coefficient of friction with the material of the bracket and/or strut can be mounted between the bracket and the strut.

In some embodiments the bracket comprises a slotted hole that extends in the upward direction, and the pivot axis extends through the slotted hole. Said slotted hole can be arranged for adjusting the vertical distance between the lower neck mount and the pivot axis. Accordingly, the vertical position of the lower neck mount can be set to account for manufacturing tolerances in the axial direction of the elongated pressure vessel.

To account for axial expansion and contraction of the pressure vessel due to variations in internal pressure the lower support arm may be flexible in the axial direction of the elongated pressure vessel. Therefore, in preferred embodiments, the lower support arm comprises a flex plate assembly comprising at least one flex plate arranged for movably coupling the lower neck mount to the strut. Preferably the at least one flex plate has a flexibility in an out-of-plane direction for allowing an out-of-plane translation and tilting of the lower neck mount with respect to the strut, and a rigidity in at least two in-plane directions for constraining in-plane translations of the lower neck mount with respect to the strut, and a rotation about an axial direction of the elongated pressure vessel. In this way, during normal operating conditions the lower axial end of the elongated pressure vessel is held in position, while the elongated pressure vessel is allowed to axially expand, contract and tilt with minimal internal stresses being induced.

In one variant, the at least one flex plate is triangular, or V-shaped, having a first branch, or leg, that extends from the lower neck mount toward the strut in a first in-plane direction and a second branch, or leg, that extends from the lower neck mount toward the strut in a second in-plane direction at an angle to the first in-plane direction. The first branch may be connected to the strut by a first bracket that is pivotable about a first pivot axis, and the second branch may be connected to the strut by a second bracket that is pivotable about a second pivot axis. The base of the triangular flex plate may be formed by the part of the strut that extends between the first and second bracket. In case of a frontal or side collision of the truck, the first and/or second brackets initiate out-of-plane buckling of the at least one triangular flex plate by pivoting about the respective first and second pivot axes, effectively lowering the crash related in-plane collapse buckling forces of the flex plate. When the flex plate(s) is buckled, the in-plane translations of the lower neck mount are no longer constrained and the lower end of the elongated pressure vessel is able to move with respect to the strut, to absorb a further portion of the impact energy and avoid a peak force at the lower neck mount. In this sense the pivotable brackets stimulate and improve the buckling performance of the flex plate in case of a crash impact, resulting in better and more accurate or reliable protection of the neck mounted boss ends of the upstanding elongated pressure vessel. In this manner, more crash energy (or compensation stroke) can be absorbed into the pivotally mounted flex plate fixation system.

The flex plate assembly may comprise multiple, e.g. two or more triangular flex plates that are stacked in the out-of-plane direction. Said at least two triangular flex plates may be connected as a stack to the strut by means of the first and second brackets. By using multiple flex plates instead of a single flex plate, the stress per flex plate can be reduced without sacrificing the total strength of the flex plate assembly.

In some variants of the triangular flex plate assembly described above, the first pivot axis extends from a lateral side of the strut primarily or substantially transverse to a driving direction of the truck, and the second pivot axis extends from a rear side of the strut primarily or substantially in the rearward driving direction. In this way, both side impacts as well as frontal impacts on the truck can be mitigated.

The truck may further comprise a cabin that is mounted to the chassis by an impact device. Said impact device may be configured to allow a rearward movement of the cabin with respect to the chassis in case of a frontal crash. In such cases, since the cabin floor has a relatively high in-plane stiffness, the rigid cabin floor initiates a pitch deformation of the strut with an explicit point of rotation once it hits into the upstanding strut(s). Such a situation is for instance present during a so-called "frontal trailer back" collision where a truck runs into a predecessor truck trailer combination that is standing still. In this use case first the cabin moves in backward direction over the chassis, hitting the upstanding pressure vessel in the top and invoking an initial pitch rotation along the upper ball joint based neck mount support in the backpack frame structure. To be followed shortly after with a hit against the strut via the rigid cabin floor in the lower region of the strut, further engaging and facilitating the primary initiated pith rotation of the upstanding pressure vessel without significant resistance, advantageously keeping the upper ball joint free from lateral load. The lower support arm is preferably connected to the strut at a vertical distance below the cabin floor level, i.e. below the point of rotation of the pitch movement, to avoid that the cabin floor damages or breaks the connection between the strut and the lower neck mount and contributes to placement of long elongated upstanding pressure vessels which is important for maximization of fuel storage. To protect the lower neck mount against high radial impact loads it is preferred that the lower neck mount can move rearward easily without significant resistance (or breath back) over the chassis in correspondence to the initiated pitch rotation of the vessel which is now maintained by the upper ball joint and the pitch point of the deforming strut at het level of the rigid cabin floor. Here, the rotation of the pivotable bracket advantageously helps to initiate buckling of the flex plate(s) at the bottom end of the vessel, which allows the neck mount to breath backwards. Furthermore, the rigid cabin floor invoked deformation of the strut also advantageously helps to minimize the axial reaction force in the upper neck mount, e.g. formed by a stiff ball joint, when the vessel is being pulled down during the deformation of the pitching strut.

A front side of the strut facing the cabin of the truck is preferably weakened at the cabin floor level to facilitate buckling of the strut, e.g. the pitch movement about the point of rotation when impacted by the cabin floor during a frontal crash of the truck. This also reduces the impact force acting on the cabin structure, keeping the internal cabin geometry intact thereby improving occupant safety.

For example, in some variants the strut has a truss structure comprising a pair of upstanding pillars and a number of cross beams interconnecting the pair of upstanding pillars in a zigzag pattern. In a particular example, the whole strut assembly may be formed out of folded sheet metal with punched cutouts to provide for the truss structure in the vertical plane that is primarily in flush with the driving direction. Preferably, at the cabin floor level, the front side of the strut is devoid of cross beams or other reinforcement elements. Compared to conventional frame configurations, such a strut structure advantageously reduces the peak load on the neck mounts, e.g. by up to 40%, due to the lower buckling resistance of the strut.

In some embodiments, the cabin of the truck has a rear wall that is provided with a crash structure, e.g. between the cabin and the upstanding backpack frame that suspends the elongated pressure vessel. Said crash structure, or crash zone, may be arranged for gently deforming and adapting to the opposing cylindrical tank body when the cabin and the backpack fuel storage system collide into each other during an impact on the truck. For example, the crash structure in the rear wall of the cabin may be formed by local "soft" or structurally weakened portions of the rear wall, e.g. in the driving direction of the truck, to provide a cushion for the stiff cylindrical body of the upstanding pressure vessel in case of a collision between the cabin and the suspended elongated pressure vessel. Alternatively, or additionally, the crash structure may comprise one or more cushion elements that are mounted in a gap between the cabin and the frame. Under load, such cushion elements may be arranged to compress, collapse, buckle or fold to reduce the gap between the cabin and frame while absorbing a portion of the impact energy. Hence, when the structure is exposed to a force in the direction in which the structure is weakened, the zone will act as the weakest link. The kinetic energy released in a collision, for example, will be absorbed for the most part by the deformation of the crash zone. As a result, fewer forces are exerted on the elongated pressure vessel. In this manner the carefully designed cabin structure acts as a crash impact buffer.

### BRIEF DESCRIPTION OF THE DRAWINGS

The invention will be further elucidated in the figures:
FIG. 1 illustrates an embodiment of a truck comprising a frame that suspends an elongated pressure vessel directly behind the cabin;
FIG. 2 provides a detailed view of an embodiment of the frame at the lower axial end of the suspended pressure vessel;
FIG. 3 illustrates an embodiment of the frame, comprising a bracket that is pivotable about a pivot axis oriented in a lateral direction;
FIG. 4 illustrates another or further embodiment of the frame, wherein the pivot axis is oriented in the rearward driving direction;
FIG. 5 illustrates yet another or further embodiment of the frame, in which the support arm comprises a multi-layer flex plate assembly that is connected to the strut by a pair of differently oriented brackets;
FIG. 6 provides a side view of an embodiment of the frame, wherein the strut comprises a truss structure.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

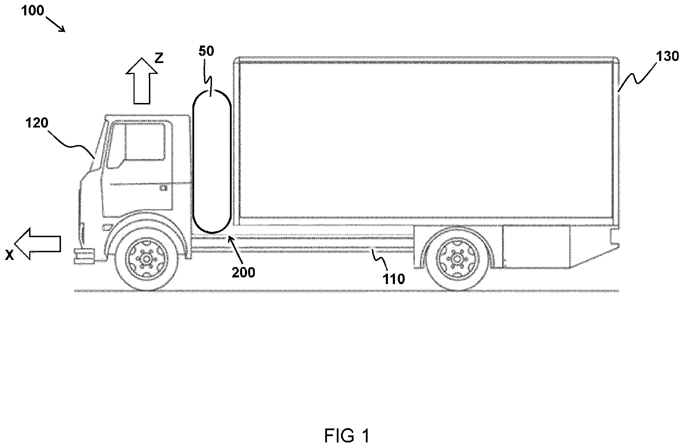

FIG 1 illustrates a truck 100, such as a box truck, preferably a Fuel Cell Electric Vehicle (FCEV) powered by a (hydrogen) fuel cell unit or a vehicle powered by a Hydrogen Internal Combustion Engine (H2-ICE).

Truck 100 may also refer to typical tractor semi-trailer combinations with a fifth wheel (not shown) connecting the semi-trailer with its cargo box system 130 to the tractor. Box 130, the actual compartment wherein in the cargo or additional construction equipment is carried above the tractor chassis ladder frame behind the cabin, may refer to box trucks as well as tractor semi-trailer applications, or in more general terms, a load or structure that is attached to the chassis behind the cabin. Alternatively, truck 100 may refer to the tractor unit only, without any type of cargo box or trailer attached. Mounted to a chassis 110 of the truck 100 is a frame 200 comprising one or more pressurized fuel tanks 50 for storing pressurized fuel, such as hydrogen. Preferably, the pressurized fuel tanks 50 are elongated pressure vessels. Such elongated pressure vessels may have a cylindrical body section between opposing spherical axial ends. Each axial end may be provided with an aluminium boss insert, which forms an inlet or outlet of the elongated pressure vessel, e.g. for connecting to a fuel supply line. A valve system may be provided at each axial end, e.g. integral to the boss insert, to regulate a flow of fuel into or out of the elongated pressure vessel and protect the vessel against temperature and pressure overloads. Hence, the axial ends of the pressurized fuel tank are relatively fragile compared to the thick cylindrical (carbon fibre) body section of the tank.

The frame 200 extends from the chassis 110 behind the cabin 120, e.g. directly behind the cabin 120, or into the space between the cabin 120 and the trailer or cargo box 130 of the truck, and is arranged for suspending one or more elongated pressure vessels 50 on a rear side of the cabin 120 e.g. in a so called "cabin backpack" configuration. An example of a vessel mount structure for such a "cabin backpack" configuration is disclosed in EP4045351. The one or more elongated pressure vessels 50 are oriented in a substantially vertical direction Z, e.g. an upright orientation, normal to the road surface and may be positioned at the outer side corners of the rear wall of the cabin 120.

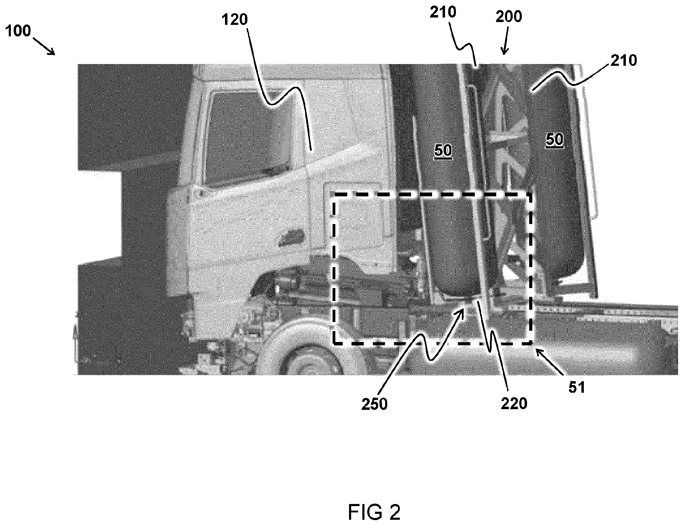

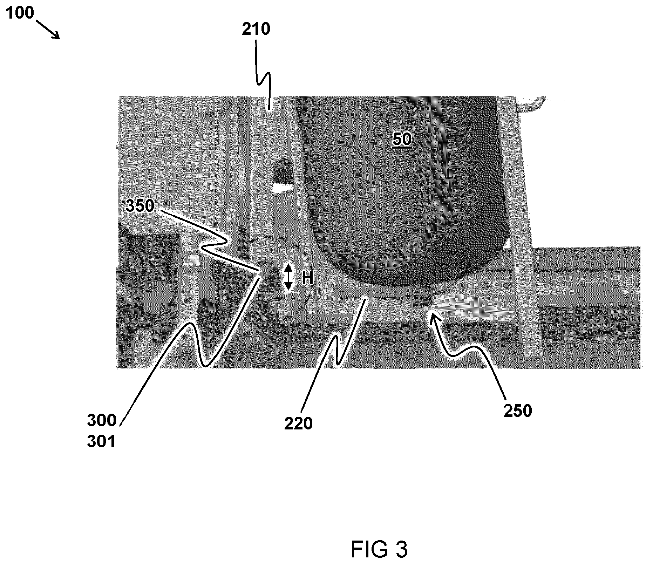

As illustrated in FIG. 2, the frame 200 comprises a pair of struts 210 that are rigidly connected to the chassis 110. In particular, the chassis includes a pair of longitudinal chassis members that extend between a front axle and a rear axle of the truck. Each strut 210 is coupled to one of the longitudinal chassis members and extends upward. The struts 210 may be interconnected, e.g. by a series of laterally straight and/or diagonal cross beams, as shown in FIG. 2. On each lateral side of the truck, the frame 200 provides an upper and lower neck mount 250 that are respectively mounted to the upper and lower axial ends 51 of the elongated pressure vessel 50 by an upper and lower support arm 220 (also indicated in FIG.3). The upper neck mounts are not shown in FIG. 2. The elongate pressure vessel 50 is only suspended at its axial ends 51. That is, no further mounts, such as strap mounts, or other support elements are included or needed to suspend the elongate pressure vessel. By only suspending the elongate pressure vessel 50 at its axial ends 51, the elongate pressure vessel is free to radially expand and contract in response to internal pressure variations inside the vessel over time, e.g. to allow "breathing" of the pressure vessel whilst maximizing the use of available packaging space in radial direction of the cylindrical elongate pressure vessel. Each axial end 51 may be provided with a boss end, to facilitate the connection between the elongate pressure vessel and the neck mounts 250.

FIG. 3 provides a detailed view of an embodiment of the frame 200 at the lower axial end of the elongated pressure vessel. The lower support arm 220 is connected to the strut 210 by a bracket 300. The bracket 300 is mounted to the strut 210 by a single bolt 350. The centerline of the single bolt 350 defines the pivot axis 301 about which the bracket 300 is pivotable. Preferably, the bracket 300 only starts to pivot about the pivot axis 301 when a torque on the bracket 300 exceeds a threshold value. The torque can e.g. be the result of a frontal or side impact on the truck, particularly on the upstanding pressure vessel 50. The threshold value may be set such that during normal driving and operating conditions of the truck the bracket 300 does not rotate about the pivot axis 301. Only when a certain level of torque or force is applied on the bracket 300, indicative of a crash, the bracket 300 is able to rotate or otherwise move with respect to the strut 210. The bracket 300 can for example be mounted to the strut by means of a friction coupling that constrains rotation of the bracket 300 about the pivot axis 301 when a torque on the bracket 300 is below the threshold value, and that allows said rotation when the applied torque is higher than the threshold value. The friction coupling may be provided by the single bolt that forms the pivot axis 301. By tightening or loosening the bolt connection, the threshold value can be adjusted.

The lower support arm 220 is provided at a substantially vertical distance H below the pivot axis 301. For example, the vertical distance H is at least 10 millimeter, preferably between 20-90 millimeter. The vertical distance may be up to 100 millimeter, or more. Hence, by pivoting about the pivot axis 301, the bracket 300 guides the lower support arm 220 over a guided path that comprises an arc about the pivot axis 301. The radius of the arc can be set by adjusting the vertical distance H between the lower support arm 220 and the pivot axis 301. As understood by the skilled person, a longer vertical distance H creates a flatter arc. Preferably the arc has an arc length of at least 15 millimeter, preferably at least 20 millimeter, in the rearward driving direction of the truck, or in the lateral direction of the truck transverse to the driving direction. In other words, the stroke of movement of the support arm that is allowed by the bracket is preferably more than 15 or 20 millimeters, e.g. up to 50 or 100 millimeters. In preferred embodiments wherein the lower support arm 220 comprises one or more flex plates, the bracket 300 may be arranged to pivot in an upward direction during a crash to initiate buckling of the flex plate(s). As understood by the skilled person, a longer vertical distance H may create a lower force threshold, oriented in radial direction of the neck mount, above which the bracket 300 breaks free, starts to pivot and initiate buckling of the flex plate.

In this way, in case of an impact on the truck the bracket 300 can allow a movement of the lower support arm 220 with respect to the strut 210 while maintaining the mechanical connection, to protect the lower neck mount 250 against overloads

In the exemplary embodiment illustrated in FIG. 3 the bracket 300 generally has an L-shape comprising a leg that extends downward from the pivot axis 301 towards a foot that extends outward from the strut 210 and that is mounted to the lower support arm 220.

As explained earlier, the vertical distance H between the lower support arm 220 and the pivot axis 301 defines at least partially the guided path, i.e. arc trajectory, of the support arm 220 during a crash. In order to adjust the vertical distance H the bracket 300 may comprise a slotted hole 310 that extends in the upward direction, and the pivot axis 301 may extend through the slotted hole 310. Hence, when the bolt connection is loose the bracket 300 can be moved up or downwards to set the vertical distance H. Moreover, the slotted hole 310 can be used to adjust the vertical position of the bracket 300 with respect to the lower axial end of the elongated pressure vessel. Due to manufacturing tolerances of the vessel and/or the frame structure, it may be necessary to reposition the bracket 300 in the vertical direction such that the support arm is properly aligned with the boss end on the pressure vessel's axial end, so that the vessel is suspended with minimal internal stresses. Vice versa the slotted hole 310 may also be integrated into the opposing strut 210 part with the objective to guarantee a constant distance parameter H independent of manufacturing tolerances of the vessel, resulting in less spread crash impact behavior of the total setup.

In FIG. 3, the bracket 300 is shown to be mounted to a pivot axis 301 that extends from a lateral side of the strut 210, in a laterally outward direction from the truck. Accordingly, the guided path that is formed by rotation of the bracket 300 about the pivot axis 301 extends across the lateral side of the strut 210, in a rearward driving direction of the truck. This configuration is particularly suitable for absorbing impact energy caused by a frontal crash of the truck.

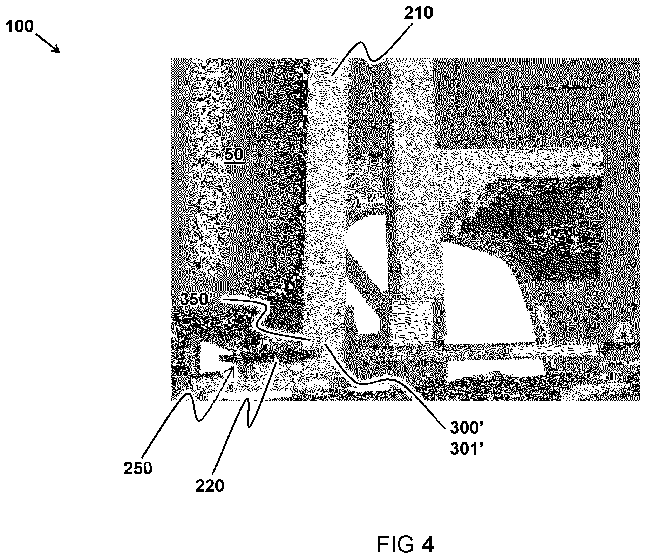

As illustrated in FIG. 4, an alternative or additional bracket 300' may be mounted to an alternative or additional pivot axis 301' that extends from a rear side of the strut 210 and protrudes in the rearward driving direction of the truck. In this embodiment, the pivot axis 301' is provided by a single bolt 350' that connects the bracket 300' to the strut 210. The thus formed guide path extends across the rear side of the strut and/or frame in a lateral direction of the truck, to absorb impact energy caused by a side impact on the truck, particularly the upstanding pressure vessel. Rear bracket 300' may be used alternatively or additionally to the lateral bracket 300 illustrated in FIG. 3. For example, in preferred embodiments the support arm 220 comprises two branches that extend between the lower neck mount and the strut. One of the branches may be mounted to the lateral side of the strut 210 by means of the lateral bracket 300, and the other branch may be mounted to the rear side of the strut 210 by means of the rear bracket 300'. In this way, impact energy caused by frontal and side impact can both be absorbed. Instead of the lateral or rear face of the strut 210, the bracket 300, 300' can be provided on any other part of the frame 200, and the corresponding pivot axis 301, 301' be extend in other directions as mentioned above. Also, more than two brackets 300, 300' can be used to mount the support arm 220 to the strut.

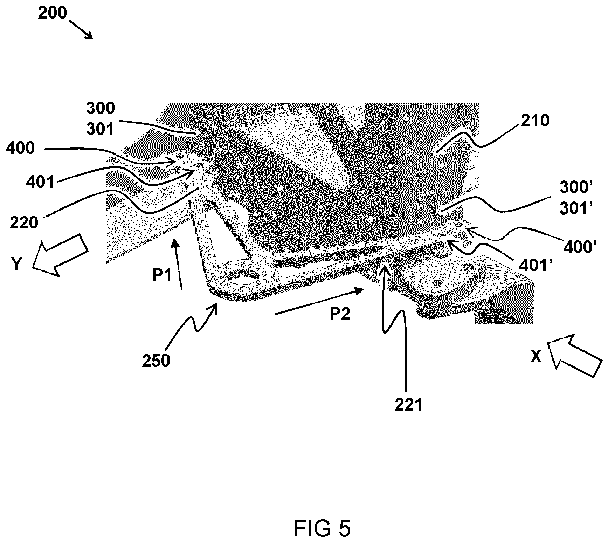

FIG. 5 illustrates an embodiment of the frame 200 in which the lower support arm 220 comprises a flex plate assembly formed by a stack of flex plates 221 that are arranged for movably coupling the lower neck mount 250 to the strut 210. Instead of multiple flex plates 221, the flex plate assembly may comprise a single flex plate 221. The at least one flex plate 221 has a flexibility in an out-of-plane direction for allowing an out-of-plane translation and tilting of the lower neck mount 250 with respect to the strut 210, and a rigidity in at least two in-plane directions P1, P2 for constraining in-plane translations of the lower neck mount 250 with respect to the strut 210, as well as a rotation about an axial direction of the elongated pressure vessel. As illustrated, the flex plates 221 are triangular, having a first branch that extends from the lower neck mount 250 toward the strut 210 in the first in-plane direction P1 and a second branch that extends from the lower neck mount 250 toward the strut 210 in the second in-plane direction P2. The second in-plane direction P2 is at an angle to the first in-plane direction P1, e.g. an angle between 60-120 degrees, preferably 85-95 degrees. The first branch is pivotably connected to the strut 210 by a first bracket 300 about a first pivot axis 301, and the second branch is pivotably connected to the strut 210 by a second bracket 300' about a second pivot axis 301'. In case of a frontal or side collision of the truck, the first and second brackets 300, 300' initiate out-of-plane buckling of the at least one triangular flex plate by pivoting about the respective first and second pivot axes 301, 301'.

In the embodiment illustrated in FIG. 5, the first pivot axis 301 extends from a lateral side of the strut 210 transverse to a driving direction D of the truck, and the second pivot axis 301' extends from a rear side of the strut 210 in the rearward driving direction D.

In the embodiment of FIG. 5 both L-shaped brackets 300, 300' are mounted per bracket the individual branches of the flex plate 220 via two bolts 400, 401 and 400', 401'. In this manner the whole flex plate assembly including both brackets 300, 300' forms one tight pre-assembled unit that allows for robust, simple and easy fixation and alignment to the strut 210 with only two bolts 350, 350' (for reference see FIG. 3 and FIG. 4) that provide for the two separately acting pivot axes 301, 301'.

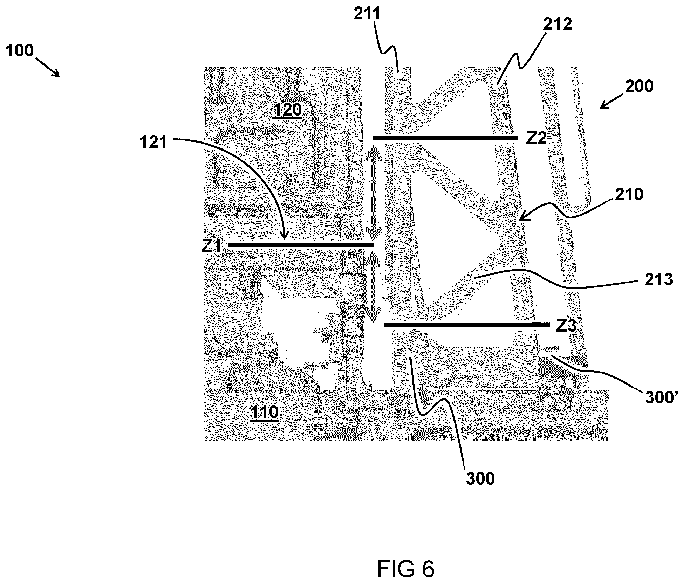

FIG. 6 illustrates another or further embodiment of the truck 100. The cabin 120 of the truck 100 includes a cabin floor 121. The cabin floor 121 provides a substantially horizontal plane to which for example the driver's seat is mounted. The cabin 121 is suspended to the chassis 110 so that the cabin floor 121 is provided at a certain cabin floor level, or height Z1. In case of a frontal impact on the truck, the cabin 120 may shift rearwards with respect to the chassis. As a result, the rear wall of the cabin may collide into the suspended elongated pressure vessel(s). To reduce the load on the elongated pressure vessel, the rear wall of the cabin may be provided with a crash structure, e.g. a structure that is weakened in the driving direction of the truck. When exposed to a frontal impact force, the crash structure acts as the weakest link. The kinetic energy released in a frontal collision will be absorbed for the most part by the deformation of the crash structure. As a result, lower forces are exerted on the occupants in the cabin and on the elongated pressure vessel(s) suspended behind the cabin.

Furthermore, during a frontal crash the cabin floor 121 may collide with the frame 200. To facilitate buckling of the frame 200 and prevent excessive peak loads on the neck mounts, the strut 210 of the frame 200 may have a truss structure as illustrated in FIG. 6. The strut 210 comprises a pair of upstanding pillars, e.g. a front and rear pillar 211, 212, that extend upward from one of the longitudinal chassis members 110. A number of cross beams 213 interconnect the front and rear pillars 211, 212 in a zigzag pattern. At the cabin floor level Z1, the front side of the strut 210 is preferably devoid of a connection with a cross beam. As can be seen in FIG. 6, the front pillar 211 connects with a cross beam at a level above Z2 or below Z3 the cabin floor level Z1. Hence, at the cabin floor level Z1 a part of the strut 201 is weakened in plane of the cabin floor. Preferably, the lower support arm 220 and its corresponding brackets 300, 300' are connected to the strut at a vertical distance below the cabin floor level to allow for a strut design the weakened zig zag truss structure at the level Z1 of the rigid cabin floor whilst the lower axial end of the elongated pressure vessel remains connected to the strut in case of an impact. Moreover, such a low placement of the support arm 220 facilitates the placement of extremely long elongated upstanding pressure vessels which is important for maximization of fuel storage.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (100), comprising a chassis (110) that includes a pair of longitudinal chassis members that extend between a front axle and a rear axle of the truck, and a frame (200) arranged for suspending an elongate pressure vessel (50) in a substantially upright orientation behind a cabin (120) of the truck, wherein the frame (200) comprises a strut (210) that extends upward from a top side of the chassis (110), a lower support arm (220) extending from the strut (210) and providing a lower neck mount (250) that is mounted to a lower axial end (51) of the elongated pressure vessel;
**characterized in that** the lower support arm (220) is connected to the strut (210) by a bracket (300);
wherein the bracket (300) is pivotable about a pivot axis (301) that extends from the strut (210); and
wherein the lower support arm (220) is provided at a vertical distance (H) below or above the pivot axis (301);
wherein the pivotable bracket (300) is arranged for allowing a movement of the lower support arm (220) with respect to the strut (210) over a guided path transverse to the pivot axis (301) while maintaining the mechanical connection in case of an impact on the truck (100), to protect the lower neck mount (250) against overloads.

2. The truck (100) according to claim 1, wherein the bracket (300) has an L-shape comprising a leg that extends downward or upward from the pivot axis (301) towards a foot that extends outward from the strut (210) and is mounted to the lower support arm (220).

3. The truck (100) according to any preceding claim, wherein the vertical distance (H) between the pivot axis (301) and the lower support arm (220) is at least 10 millimeter, preferably between 20-90 millimeter.

4. The truck (100) according to any preceding claim, wherein the bracket (300) is mounted to the frame (200) by a single bolt (350), and wherein a centerline of the single bolt defines the pivot axis (301).

5. The truck (100) according to any preceding claim, wherein the bracket (300) is arranged for allowing the lower support arm (220) to pivot about the pivot axis (301) only in response to a torque on the bracket (300) exceeding a threshold value.

6. The truck (100) according to any preceding claim, wherein the bracket (300) is mounted to the strut (210) by means of a friction coupling, wherein the friction coupling is preferably provided by a single bolt (350) that forms the pivot axis (301) and that connects the bracket (300) to the strut (210) with a pretension force.

7. The truck (100) according to any preceding claim, wherein the bracket (300) or the strut (210) comprises a slotted hole (310) that extends in the upward direction, wherein the pivot axis (301) extends through the slotted hole (310), wherein the slotted hole (310) is arranged for adjusting the vertical distance (H) between the lower support arm (220) and the pivot axis (301).

8. The truck (100) according to any preceding claim, wherein the lower support arm (220) comprises a flex plate assembly comprising at least one flex plate (221) arranged for movably coupling the lower neck mount (250) to the strut (210);
wherein the at least one flex plate (221) has a flexibility in an out-of-plane direction for allowing an out-of-plane translation and tilting of the lower neck mount (250) with respect to the strut (210), and a rigidity in at least two in-plane directions (P1, P2) for constraining in-plane translations of the lower neck mount (250) with respect to the strut (210), and a rotation about an axial direction of the elongated pressure vessel (50).

9. The truck (100) according to claim 8, wherein the at least one flex plate (221) is triangular, having a first branch that extends from the lower neck mount (250) toward the strut (210) in a first in-plane direction (P1) and a second branch that extends from the lower neck mount (250) toward the strut (210) in a second in-plane direction (P2) at an angle to the first in-plane direction (P1), wherein the first branch is pivotably connected to the strut (210) by a first bracket (300) about a first pivot axis (301), and wherein the second branch is pivotably connected to the strut (210) by a second bracket (300') about a second pivot axis (301'), wherein, in case of a frontal or side collision of the truck, the first and/or second bracket (300, 300') initiates out-of-plane buckling of the at least one triangular flex plate (221) by pivoting about the respective first and/or second pivot axes (301, 301').

10. The truck (100) according to claim 9, wherein the flex plate assembly comprises at least two triangular flex plates that are stacked in the out-of-plane direction, wherein said stack of at least two triangular flex plates is connected to the strut (210) by the first and second brackets (300, 300').

11. The truck (100) according to claim 9 or 10, wherein the first pivot axis (301) extends from a lateral side of the strut (210) substantially transverse to a driving direction (D) of the truck, and wherein the second pivot axis (301') extends from a rear side of the strut (210) substantially in the rearward driving direction.

12. The truck (100) according to any of claims 9-11, wherein each of the first and second bracket (300, 300') has an L-shape comprising a leg that extends downward or upward from the respective first or second pivot axis (301, 301') towards a foot that extends outward from the strut (210) and is mounted to the first or second branch of the lower support arm (220) by means of at least two bolts (400, 401, 400', 401').

13. The truck (100) according to any preceding claim, wherein the cabin (120) of the truck is mounted to the chassis (110) by an impact device, wherein the impact device is configured to allow a rearward movement of the cabin (120) with respect to the chassis (110) in case of a frontal crash, and wherein the lower support arm (220) is connected to the strut (210) at a vertical distance (Z3) below a cabin floor level (Z1) of the cabin, wherein preferably a front side of the strut (210) facing the cabin (120) of the truck is weakened at the cabin floor level (Z 1) to facilitate deformation of the strut (210) in a pitch direction when impacted by the cabin floor (121) during a frontal crash of the truck.

14. The truck (100) according to claim 13, wherein the strut (210) has a truss structure comprising a pair of upstanding pillars (211, 212) and a number of cross beams (213) interconnecting the pair of upstanding pillars (211, 212) in a zigzag pattern, wherein, at the cabin floor level (Z1), the front side of the strut is devoid of cross beams (213), wherein the strut (210) is preferably made from sheet metal provided with cutouts for forming the truss structure.

15. The truck (100) according to any preceding claim, wherein the cabin (120) has a rear wall that is provided with a crash structure, wherein the crash structure is arranged for deforming and adapting to the opposing cylindrical tank body when the cabin and the backpack fuel storage system collide into each other during an impact on the truck.

## Patentansprüche

1. Lastkraftwagen (100), umfassend ein Fahrgestell (110), das ein Paar von Längsfahrgestellträgern umfasst, die sich zwischen einer Vorderachse und einer Hinterachse des Lastkraftwagens erstrecken, und einen Rahmen (200), angeordnet zum Aufhängen eines länglichen Druckbehälters (50) in einer im Wesentlichen aufrechten Ausrichtung hinter einer Kabine (120) des Lastkraftwagens, wobei der Rahmen (200) eine Strebe (210), die sich von einer Oberseite des Fahrgestells (110) nach oben erstreckt, und einen unteren Stützarm (220), der sich von der Strebe (210) erstreckt und eine untere Halsaufnahme (250), die an einem unteren axialen Ende (51) des länglichen Druckbehälters montiert ist, bereitstellt;
**dadurch gekennzeichnet, dass** der untere Stützarm (220) durch eine Konsole (300) mit der Strebe (210) verbunden ist;
wobei die Konsole (300) um eine Schwenkachse (301), die sich von der Strebe (210) erstreckt, schwenkbar ist; und
wobei der untere Stützarm (220) in einem vertikalen Abstand (H) unterhalb oder oberhalb der Schwenkachse (301) bereitgestellt ist;
wobei die schwenkbare Konsole (300) dazu angeordnet ist, eine Bewegung des unteren Stützarms (220) in Bezug auf die Strebe (210) über einen geführten Pfad quer zur Schwenkachse (301) zu erlauben, während im Fall eines Aufpralls auf den Lastkraftwagen (100) die mechanische Verbindung aufrechterhalten bleibt, um die untere Halsaufnahme (250) vor Überlastungen zu schützen.

2. Lastkraftwagen (100) nach Patentanspruch 1, wobei die Konsole (300) eine L-Form aufweist, umfassend ein Bein, das sich von der Schwenkachse (301) nach unten oder nach oben in Richtung eines Fußes erstreckt, der sich von der Strebe (210) nach außen erstreckt und am unteren Stützarm (220) montiert ist.

3. Lastkraftwagen (100) nach einem der vorhergehenden Patentansprüche, wobei der vertikale Abstand (H) zwischen der Schwenkachse (301) und dem unteren Stützarm (220) wenigstens 10 Millimeter, vorzugsweise zwischen 20 und 90 Millimetern, beträgt.

4. Lastkraftwagen (100) nach einem der vorhergehenden Patentansprüche, wobei die Konsole (300) mit einer einzelnen Schraube (350) am Rahmen (200) montiert ist, und wobei eine Mittellinie der einzelnen Schraube die Schwenkachse (301) definiert.

5. Lastkraftwagen (100) nach einem der vorhergehenden Patentansprüche, wobei die Konsole (300) dazu angeordnet ist, ein Schwenken des unteren Stützarms (220) um die Schwenkachse (301) nur dann zu erlauben, wenn ein Drehmoment an der Konsole (300) einen Schwellenwert überschreitet.

6. Lastkraftwagen (100) nach einem der vorhergehenden Patentansprüche, wobei die Konsole (300) mittels einer Reibungskopplung an der Strebe (210) montiert ist, wobei die Reibungskopplung vorzugsweise durch eine einzelne Schraube (350) bereitgestellt ist, die die Schwenkachse (301) bildet und die die Konsole (300) mit einer Vorspannkraft mit der Strebe (210) verbindet.

7. Lastkraftwagen (100) nach einem der vorhergehenden Patentansprüche, wobei die Konsole (300) oder die Strebe (210) ein sich nach oben erstreckendes Langloch (310) umfasst, wobei sich die Schwenkachse (301) durch das Langloch (310) erstreckt, wobei das Langloch (310) zum Einstellen des vertikalen Abstands (H) zwischen dem unteren Stützarm (220) und der Schwenkachse (301) angeordnet ist.

8. Lastkraftwagen (100) nach einem der vorhergehenden Patentansprüche, wobei der untere Stützarm (220) eine Flexplattenanordnung umfasst, die wenigstens eine zum bewegbaren Koppeln der unteren Halsaufnahme (250) mit der Strebe (210) angeordnete Flexplatte (221) umfasst;
wobei die wenigstens eine Flexplatte (221) eine Flexibilität in einer außerhalb der Ebene liegenden Richtung aufweist, um eine Verschiebung außerhalb der Ebene und Neigen der unteren Halsaufnahme (250) in Bezug auf die Strebe (210) zu erlauben, und eine Steifigkeit in wenigstens zwei Richtungen (P1, P2) innerhalb der Ebene aufweist, um Verschiebungen der unteren Halsaufnahme (250) in Bezug auf die Strebe (210) innerhalb der Ebene und eine Rotation um eine axiale Richtung des länglichen Druckbehälters (50) einzuschränken.

9. Lastkraftwagen (100) nach Patentanspruch 8, wobei die wenigstens eine Flexplatte (221) dreieckig ist und einen ersten Abzweig aufweist, der sich von der unteren Halsaufnahme (250) hin zur Strebe (210) in einer ersten Richtung (P1) innerhalb der Ebene erstreckt, und einen zweiten Abzweig, der sich von der unteren Halsaufnahme (250) hin zur Strebe (210) in einer zweiten Richtung (P2) innerhalb der Ebene in einem Winkel zur ersten Richtung (P1) innerhalb der Ebene erstreckt, wobei der erste Abzweig durch eine erste Konsole (300) um eine erste Schwenkachse (301) schwenkbar mit der Strebe (210) verbunden ist, und wobei der zweite Abzweig durch eine zweite Konsole (300') um eine zweite Schwenkachse (301') schwenkbar mit der Strebe (210) verbunden ist, wobei im Falle eines Frontal- oder Seitenaufpralls des Lastkraftwagens die erste und/oder zweite Konsole (300, 300') durch Schwenken um die jeweilige erste und/oder zweite Schwenkachse (301, 301') ein Verbiegen der wenigstens einen dreieckigen Flexplatte (221) außerhalb der Ebene einleitet.

10. Lastkraftwagen (100) nach Patentanspruch 9, wobei die Flexplattenanordnung wenigstens zwei dreieckige Flexplatten umfasst, die in Richtung außerhalb der Ebene gestapelt sind, wobei der Stapel von wenigstens zwei dreieckigen Flexplatten durch die erste und zweite Konsole (300, 300') mit der Strebe (210) verbunden ist.

11. Lastkraftwagen (100) nach Patentanspruch 9 oder 10, wobei sich die erste Schwenkachse (301) von einer lateralen Seite der Strebe (210) im Wesentlichen quer zu einer Fahrtrichtung (D) des Lastkraftwagens erstreckt, und wobei sich die zweite Schwenkachse (301') von einer Rückseite der Strebe (210) im Wesentlichen in die Rückwärtsfahrtrichtung erstreckt.

12. Lastkraftwagen (100) nach einem der Patentansprüche 9 bis 11, wobei jede von der ersten und zweiten Konsole (300, 300') eine L-Form aufweist, umfassend ein Bein, das sich von der jeweiligen ersten oder zweiten Schwenkachse (301, 301') nach unten oder oben in Richtung eines Fußes erstreckt, der sich von der Strebe (210) nach außen erstreckt und mittels mindestens zweier Schrauben (400, 401, 400', 401') an dem ersten oder zweiten Abzweig des unteren Stützarms (220) montiert ist.

13. Lastkraftwagen (100) nach einem der vorhergehenden Patentansprüche, wobei die Kabine (120) des Lastkraftwagens durch eine Aufprallvorrichtung an dem Fahrgestell (110) montiert ist, wobei die Aufprallvorrichtung dazu konfiguriert ist, im Falle eines Frontalaufpralls eine Rückwärtsbewegung der Kabine (120) in Bezug auf das Fahrgestell (110) zu erlauben, und wobei der untere Stützarm (220) in einem vertikalen Abstand (Z3) unterhalb einer Kabinenbodenebene (Z1) der Kabine mit der Strebe (210) verbunden ist, wobei vorzugsweise eine der Kabine (120) zugewandte Vorderseite der Strebe (210) auf der Kabinenbodenebene (Z1) geschwächt ist, um eine Verformung der Strebe (210) in einer Neigungsrichtung zu erleichtern, wenn sie während eines Frontalaufpralls des Lastkraftwagens vom Kabinenboden (121) getroffen wird.

14. Lastkraftwagen (100) nach Patentanspruch 13, wobei die Strebe (210) eine Trägerstruktur aufweist, umfassend ein Paar aufrechter Säulen (211, 212) und eine Anzahl von Querträgern (213), die das Paar aufrechter Säulen (211, 212) in einem Zickzackmuster miteinander verbinden, wobei auf Kabinenbodenebene (Z1) die Vorderseite der Strebe keine Querträger (213) aufweist, wobei die Strebe (210) vorzugsweise aus Metallblech hergestellt ist, das mit Aussparungen zum Bilden der Trägerstruktur versehen ist.

15. Lastkraftwagen (100) nach einem der vorhergehenden Patentansprüche, wobei die Kabine (120) eine Rückwand aufweist, die mit einer Aufprallstruktur versehen ist, wobei die Aufprallstruktur zum Verformen und Anpassen an den gegenüberliegenden zylindrischen Tankkörper angeordnet ist, wenn die Kabine und das rucksackartige Kraftstoffspeichersystem während eines Aufpralls auf den Lastkraftwagen miteinander kollidieren.

## Revendications

1. Camion (100), comprenant un châssis (110) qui comprend une paire de longerons de châssis qui s'étendent entre un essieu avant et un essieu arrière du camion, et un cadre (200) agencé pour suspendre un récipient sous pression allongé (50) dans une orientation sensiblement verticale derrière une cabine (120) du camion, dans lequel le cadre (200) comprend un montant (210) qui s'étend vers le haut à partir d'un côté supérieur du châssis (110), un bras de support inférieur (220) s'étendant à partir du montant (210) et fournissant un support de col inférieur (250) qui est monté sur une extrémité axiale inférieure (51) du récipient sous pression allongé ;
**caractérisé en ce que** le bras de support inférieur (220) est relié au montant (210) par un support (300) ;
dans lequel le support (300) peut pivoter autour d'un axe de pivot (301) qui s'étend à partir du montant (210) ; et
dans lequel le bras de support inférieur (220) est disposé à une distance verticale (H) en dessous ou au-dessus de l'axe de pivot (301) ;
dans lequel le support pivotant (300) est agencé pour permettre un mouvement du bras de support inférieur (220) par rapport au montant (210) sur un chemin guidé transversal à l'axe de pivot (301) tout en maintenant le raccordement mécanique en cas d'impact sur le camion (100), afin de protéger le support de col inférieur (250) contre les surcharges.

2. Camion (100) selon la revendication 1, dans lequel le support (300) présente une forme en L comprenant une jambe qui s'étend vers le bas ou vers le haut à partir de l'axe de pivot (301) vers un pied qui s'étend vers l'extérieur à partir du montant (210) et est monté sur le bras de support inférieur (220).

3. Camion (100) selon l'une quelconque des revendications précédentes, dans lequel la distance verticale (H) entre l'axe de pivot (301) et le bras de support inférieur (220) est d'au moins 10 millimètres, de préférence comprise entre 20 et 90 millimètres.

4. Camion (100) selon l'une quelconque des revendications précédentes, dans lequel le support (300) est monté sur le cadre (200) par un seul boulon (350), et dans lequel une ligne centrale du boulon unique définit l'axe de pivot (301).

5. Camion (100) selon l'une quelconque des revendications précédentes, dans lequel le support (300) est agencé pour permettre au bras de support inférieur (220) de pivoter autour de l'axe de pivot (301) uniquement en réponse à un couple sur le support (300) dépassant une valeur de seuil.

6. Camion (100) selon l'une quelconque des revendications précédentes, dans lequel le support (300) est monté sur le montant (210) au moyen d'un accouplement par friction, dans lequel l'accouplement par friction est de préférence assuré par un seul boulon (350) qui forme l'axe de pivot (301) et qui relie le support (300) au montant (210) avec une force de précontrainte.

7. Camion (100) selon l'une quelconque des revendications précédentes, dans lequel le support (300) ou le montant (210) comprend un trou oblong (310) qui s'étend dans la direction ascendante, dans lequel l'axe de pivot (301) s'étend à travers le trou oblong (310), dans lequel le trou oblong (310) est agencé pour ajuster la distance verticale (H) entre le bras de support inférieur (220) et l'axe de pivot (301).

8. Camion (100) selon l'une quelconque des revendications précédentes, dans lequel le bras de support inférieur (220) comprend un ensemble de plaques flexibles comprenant au moins une plaque flexible (221) agencée pour coupler de manière mobile le support de col inférieur (250) au montant (210) ;
dans lequel la au moins une plaque flexible (221) présente une flexibilité dans une direction hors du plan permettant une translation hors du plan et une inclinaison du support de col inférieur (250) par rapport au montant (210), et une rigidité dans au moins deux directions dans le plan (P1, P2) pour contraindre les translations dans le plan du support de col inférieur (250) par rapport au montant (210), et une rotation autour d'une direction axiale du récipient sous pression allongé (50).

9. Camion (100) selon la revendication 8, dans lequel la au moins une plaque flexible (221) est triangulaire, ayant une première branche qui s'étend du support de col inférieur (250) vers le montant (210) dans une première direction dans le plan (P1) et une deuxième branche qui s'étend du support de col inférieur (250) vers le montant (210) dans une deuxième direction dans le plan (P2) selon un angle par rapport à la première direction dans le plan (P1), dans lequel la première branche est reliée de manière pivotante au montant (210) par un premier support (300) autour d'un premier axe de pivot (301), et dans lequel la deuxième branche est reliée de manière pivotante au montant (210) par un deuxième support (300') autour d'un deuxième axe de pivot (301'), dans lequel, en cas de collision frontale ou latérale du camion, le premier et/ou le deuxième support (300, 300') initie un flambage hors du plan de la au moins une plaque flexible triangulaire (221) en pivotant autour des premier et/ou deuxième axe(s) de pivot (301, 301') respectif(s).

10. Camion (100) selon la revendication 9, dans lequel l'ensemble de plaques flexibles comprend au moins deux plaques flexibles triangulaires qui sont empilées dans la direction hors du plan, dans lequel ledit empilement d'au moins deux plaques flexibles triangulaires est reliée au montant (210) par les premier et deuxième supports (300, 300').

11. Camion (100) selon la revendication 9 ou 10, dans lequel le premier axe de pivot (301) s'étend à partir d'un côté latéral du montant (210) sensiblement transversalement par rapport à une direction de marche (D) du camion, et dans lequel le deuxième axe de pivot (301') s'étend à partir d'un côté arrière du montant (210) sensiblement dans la direction de marche arrière.

12. Camion (100) selon l'une quelconque des revendications 9 à 11, dans lequel chacun des premier et deuxième supports (300, 300') présente une forme en L comprenant une jambe qui s'étend vers le bas ou vers le haut à partir des premier ou deuxième axes de pivot (301, 301') respectifs vers un pied qui s'étend vers l'extérieur à partir du montant (210) et est monté sur la première ou la deuxième branche du bras de support inférieur (220) au moyen d'au moins deux boulons (400, 401, 400', 401').

13. Camion (100) selon l'une quelconque des revendications précédentes, dans lequel la cabine (120) du camion est montée sur le châssis (110) par un dispositif d'impact, dans lequel le dispositif d'impact est configuré pour permettre un mouvement vers l'arrière de la cabine (120) par rapport au châssis (110) en cas de collision frontale, et dans lequel le bras de support inférieur (220) est raccordé au montant (210) à une distance verticale (Z3) en dessous d'un niveau de plancher de cabine (Z1) de la cabine, dans lequel, de préférence, un côté avant du montant (210) faisant face à la cabine (120) du camion est affaibli au niveau du plancher de cabine (Z1) afin de faciliter la déformation du montant (210) dans une direction de tangage lorsqu'il est percuté par le plancher de cabine (121) lors d'une collision frontale du camion.

14. Camion (100) selon la revendication 13, dans lequel le montant (210) présente une structure en treillis comprenant une paire de montants verticaux (211, 212) et un certain nombre de traverses (213) interconnectant la paire de montants verticaux (211, 212) selon un motif en zigzag, dans lequel, au niveau du niveau de plancher de cabine (Z1), le côté avant du montant est dépourvu de traverses (213), dans lequel le montant (210) est de préférence réalisé en tôle pourvue de découpes formant la structure en treillis.

15. Camion (100) selon l'une quelconque des revendications précédentes, dans lequel la cabine (120) présente une paroi arrière qui est pourvue d'une structure d'absorption de choc, dans lequel la structure d'absorption de choc est agencée pour se déformer et s'adapter au corps cylindrique du réservoir opposé lorsque la cabine et le système de stockage de carburant arrière entrent en collision l'un avec l'autre lors d'un impact sur le camion.
